# EUROPÄISCHE PATENTSCHRIFT

(11) **EP 4 134 564 B1**
(45) Veröffentlichungstag und Bekanntmachung des Hinweises auf die Patenterteilung: **15.11.2023**
(21) Anmeldenummer: 21190558.3
(22) Anmeldetag: 10.08.2021
(51) Int. Cl.: F16D 65/00

(54) **BEFESTIGUNGSEINRICHTUNG EINER SCHEIBENBREMSE MIT EINEN DREHZAHLSENSOR**
MOUNTING DEVICE FOR A DISC BRAKE WITH A SPEED SENSOR
DISPOSITIF DE FIXATION D'UN FREIN À DISQUE POURVU D'UN CAPTEUR DE VITESSE

(43) Veröffentlichungstag der Anmeldung: 15.02.2023
(73) Patentinhaber: ZF CV Systems Europe BV, 1170 Brussels (BE)
(72) Erfinder: REDEMANN, Bernward, 68766 Hockenheim (DE)
(74) Vertreter: Ohlendorf, Henrike

(56) Entgegenhaltungen:
- EP-A1- 2 895 763
- DE-A1-102012 006 081
- GB-A- 2 225 398
- KR-B1- 102 030 281
- US-A1- 2019 322 265

## Beschreibung

Die Erfindung betrifft eine Befestigungseinrichtung einer Scheibenbremse mit einen Drehzahlsensor für Fahrzeuge, insbesondere für Nutzfahrzeuge. Scheibenbremsen dienen dazu ein Fahrzeug sicher bis zum Stillstand zu verzögern oder im Falle einer Gefahrensituation das Fahrzeug mittels Bremseingriffen zum Ausweichen zu bewegen. Diese Bremseingriffe erfolgen über ein Antiblokkiersystem auch ABS-System genannt. ABS-Systeme überwachen den Schlupf mittels Sensoren, insbesondere mittels Drehzahlsensoren an jedem Fahrzeugrad. Als Schlupf ist die Abweichung der Drehzahl (Ist-Drehzahl) eines oder mehrerer angetriebener Räder im Vergleich eines formschlüssig mitlaufenden Rades (Soll-Drehzahl) zu verstehen. Zur Detektion des Schlupfes ist an jedem Fahrzeugrad ein Drehzahlsensor angeordnet. Im Falle eines Überschreitens einer Kraftschlussgrenze zwischen dem Rad und der Fahrbahn blockiert das Rad oder das Rad dreht durch. Solche Drehzahlsensoren sind üblicherweise an Achsschenkeln des Fahrzeugs angeordnet. Genauer gesagt sind die Drehzahlsensoren über Befestigungseinrichtungen an den Achsschenkeln des Fahrzeugs oder an den Achsnaben des Fahrzeugs angeordnet und detektieren die Drehzahl des Rades über einen Erreger, der an der Radachse in Form eines Impulsrings oder beispielsweise in der Bremsscheibe integriert ist. Erreger sind ferromagnetische Strukturen, wie Zahnräder oder Wellen, wobei der Drehzahlsensor die Veränderung des magnetischen Flusses detektiert.

Eine solche Befestigungseinrichtung ist in der WO2005092683A1 offenbart. Der Drehzahlsensor ist außerhalb der Scheibenbremse an der Fahrzeugachse oder der Achsnabe angeordnet und der Erreger ist an einem nach innen gerichteten Teil der Achsnabe oder an der Bremsscheibe angeordnet.

Die DE19932585A1 offenbart einen Drehzahlsensor, der an einer die Scheibenbremse umgreifenden Halterung angeordnet ist, wobei die Halterung an einem Nabenträger der Fahrzeugachse angeordnet ist.

DE 10 2012 006081 A1 offenbart eine Befestigungseinrichtung einer Scheibenbremse mit einem Bremsträger, wobei der Bremsträger zwei parallel zu einer Bremsscheibe angeordnete Streben umfasst, wobei die Streben in ihrer Erstreckungsrichtung zwei Endabschnitte aufweisen und die Streben an ihren beiden Endabschnitten über zwei Verbindungselemente miteinander verbunden sind, wobei die Strebe Befestigungsmittel zum anflanschen an eine Fahrzeugachse aufweist.

All diese Lösungen aus dem Stand der Technik haben gemein, dass der Drehzahlsensor außerhalb einer Scheibenbremse über eine zusätzliche Befestigungseinrichtung an der Fahrzeugachse oder der Achsnabe des Fahrzeugs angeordnet ist. Die Befestigungseinrichtung weist eine Bohrung auf, in der der Drehzahlsensor über eine Hülse eingepresst ist oder der Drehzahlsensor mittels anderer Fixierungselemente, wie Schrauben oder Klemmen, an der Befestigungseinrichtung befestigt ist, damit der Drehzahlsensor zu dem Erreger in die richtigen Position bringbar ist.

Aufgabe der Erfindung ist es, eine einfache kostenreduzierende Befestigungseinrichtung für einen Drehzahlsensor bereit zu stellen. Weiterhin ist es die Aufgabe der Erfindung eine Scheibenbremse und ein Fahrzeug mit einer Scheibenbremse, aufweisend eine kostenreduzierende Befestigungseinrichtung mit einem Drehzahlsensor, bereit zu stellen.

Gelöst wird die Aufgabe dadurch, dass die Befestigungseinrichtung eine Aufnahme in einem Bremsträger der Scheibenbremse aufweist, in der der Drehzahlsensor angeordnet ist. Der Drehzahlsensor ist dazu eingerichtet eine Drehzahl eines Rades an einer Fahrzeugachse zu detektieren, an dem der Drehzahlsensor angeordnet ist.

Der Drehzahlsensor ist einem Fachmann auch als ABS-Sensor bekannt. Der Drehzahlsensor muss in einem festgelegten Abstand zu einem als ferromagnetisches Element ausgebildeten Erreger an oder in der Scheibenbremse angeordnet sein. Als Erreger ist beispielsweise ein Polrad bekannt. Bei einer als Gleitsattelscheibenbremse ausgebildeten Scheibenbremse ist der Bremsträger ein feststehendes Element, da der Bremsträger fest an einer Fahrzeugachse angeflanscht ist. Der zumindest teilweise in dem Bremsträger oder an dem Bremsträger angeordnete Drehzahlsensor bleibt dauerhaft in einem festen Abstand zu dem Erreger. Der feste Abstand des Drehzahlsensors zu dem Erreger erlaubt eine beständige Funktionssicherheit und eine genaue Messung einer Raddrehzahl an einer Fahrzeugachse eines Fahrzeugs. Der Bremsträger umfasst zwei parallel zu einer Bremsscheibe angeordnete Streben zur Aufnahme von je einem Bremsbelag die in ihrer Erstreckungsrichtung axial zwei Endabschnitte aufweisen und die Streben an Ihren zwei Endabschnitten über zwei Verbindungselemente miteinander verbunden sind, wobei die Strebe Befestigungsmittel zum anflanschen an eine Fahrzeugachse aufweist. Die Streben können in Ihrer Erstreckungsrichtung axial durchgängig oder unterbrochen ausgebildet sein. Eine zusätzliche an einer Fahrzeugachse angeschweißte als Befestigungseinrichtung ausgebildete Halterung zur Anordnung des Drehzahlsensors ist nicht mehr notwendig. Ein weiterer Vorteil ergibt sich durch den Wegfall der zusätzlichen Halterung in der Hinsicht, dass die Fahrzeugachse kürzer ausgebildet werden kann, wodurch zusätzlicher Bauraum im Fahrzeug entsteht und Kosten durch Materialeinsparungen gesenkt werden.

In einer weiteren Ausgestaltung ist die Aufnahme der Befestigungseinrichtung als Bohrloch ausgebildet, wobei das Bohrloch mittels eines Bohres in dem Bremsträger eingebracht ist bzw. in dem Bremsträger gebohrt wird. Das Bohrloch ist ein Bestandteil der Befestigungseinrichtung zum fixieren des Drehzahlsensors an der Scheibenbremse. Die als Bohrloch ausgestaltete Aufnahme ist kostengünstig, da es keiner weiteren Bauteile Bedarf und das Bohrloch erfordert keinen weiteren Bauraum innerhalb der Scheibenbremse. Es ist auch denkbar, dass, die Aufnahme als Durchgangsöffnung ausgebildet ist. Die Durchgangsöffnung wird während der Herstellung des Bremsträgers gleichzeitig hergestellt. Als Beispiel sei hier ein Gießverfahren zu nennen.

Der Drehzahlsensor ist in einer weiteren Ausgestaltung zumindest teilweise in dem Bohrloch angeordnet. Das Bohrloch ist für eine Messung der Raddrehzahl durchgängig ausgebildet und durchdringt den Bremsträger, damit der Drehzahlsensor Änderung an dem Erreger detektieren kann. Als durchgängige Bohrung versteht der Fachmann, dass die Bohrung keine Sacklochbohrung ist. Das Bohrloch wird nach dem Produktionsvorgangs Gießen mittels einer Bohrmaschine in den Bremsträger ausgebildet. Das Bohrloch kann aber auch direkt während des Gießvorgangs des Bremsträgers mit ausgebildet werden. Das Bohrloch ist in seiner Erstreckungsrichtung axial zum Erreger ausgebildet. Eine gesonderte Anpassung des Drehzahlsensors ist nicht mehr oder nur noch vereinzelt, bedingt durch kleine Abweichungen des Bohrlochs zum Erreger, notwendig.

In einer Weiterbildung weist der Drehzahlsensor eine Klemmbuche zum Einbau in die Befestigungseinrichtung auf. Die Klemmbuchse ist ein Bestandteil des Drehzahlsensors. Ausgebildet ist die Klemmbuchse mit Federelementen. Der Außenradius der Klemmbuchse ist größer als der Innenradius des Bohrlochs. Die Klemmbuche wird durch zusammendrücken der Federelemente in das Bohrloch verbracht. Die Federelemente spannen den Drehzahlsensor gegen die Innenwand des Bohrlochs und verhindern ein axiales Verschieben des Drehzahlsensors in Richtung der Bremsscheibe oder entgegengesetzt der Richtung der Bremsscheibe. Es ist auch denkbar, dass die Klemmbuchse an ihrer äußeren Umfangsfläche zumindest teilweise ein Gewinde aufweist und Drehzahlsensor einseitig mittels einer Mutter oder von beiden Seiten mittels zwei Muttern an dem Bremsträger verschraubt ist. Darüber hinaus ist es auch denkbar den Drehzahlsensor in dem Bohrloch mittels einem Schweißverfahrens zu fixieren. Ein separates Anordnen einer zusätzlichen Buchse zum fixieren des Drehzahlsensors ist nicht mehr notwendig, weshalb die Montage des Drehzahlsensors um einen Arbeitsgang reduziert wird.

In einer weiteren Ausgestaltung ist der Drehzahlsensor zur Reduzierung des Drehzahlsensorverbindungskabels in seiner Erstreckungsrichtung, axial in Richtung der Bremsscheibe, an der der Fahrzeugachse zugewandten Strebe der Befestigungseinrichtung angeordnet. Zudem wird ein Verklemmen des Drehzahlsensorverbindungskabels zwischen der Bremsscheibe und den Bremsbelägen vermieden und das Kabel ist weniger Hitzeeinwirkungen, ausgelöst durch ein Zuspannen der Bremsscheibe über die Bremsbeläge, ausgesetzt.

Der Drehzahlsensor ist in einer weiteren Ausgestaltung in seiner Erstreckungsrichtung, axial in Richtung der Bremsscheibe, an einer Verlängerung des Befestigungsmittel des Bremsträgers angeordnet. Das mit der Verlängerung ausgebildete Befestigungsmittel ist an der der Fahrzeugachse zugewandten Seite des Bremsträgers angeordnet. Die Anordnung des Drehzahlsensor an der Verlängerung des Befestigungsmittel des Bremsträgers weist die gleichen Vorteile auf, wie die Anordnung an der dem Fahrzeug zugewandten Strebe. Der Drehzahlsensor kann zudem vorteilhaft variabel an dem Bremsträger angeordnet werden, sodass die Lage des Drehzahlsensor an verschiedene Einbausituationen im Fahrzeug und an verschiedene Scheibenbremsmodelle angepasst werden kann.

In einer Weiterbildung ist die Befestigungseinrichtung dazu eingerichtet, dass der Drehzahlsensor der Befestigungseinrichtung die Raddrehzahl mit einem an der Bremsscheibe angeordneten Erreger detektiert. Beispielsweise kann der der Drehzahlsensor Verformungen des an der Bremsscheibe angeordneten Erregers detektieren. Der Drehzahlsensor kann aber auch die Raddrehzahl mit einen im Lager der Bremsscheibe integrierten Erreger detektieren. Der Erreger ist als Magnet-Encoder ausgebildet und weist gegenüber anderen Erregern eine sehr gute Signalqualität, eine geringe Schmutzanfälligkeit und Einsparungen im Bauraum auf.

In einer Weiterbildung ist die als Bremsträger ausgebildete Befestigungseinrichtung dazu eingerichtet, dass der Drehzahlsensor die Raddrehzahl mit einem an der Fahrzeugachse angeordneten und als Pulsring ausgebildeten Erreger detektiert. Der Pulsring ist dem Fachmann auch unter den Namen Polrad bekannt. Der Erreger ist zwischen der Bremsscheibe und der Flanschseite des Bremsträgers angeordnet. Zur Detektion des Impulsrings ist der Drehzahlsensor an einer der Aufnahmen des Bremsträgers angeordnet. Die Aufnahme kann auch eine zusätzliche für den Drehzahlsensor angepasste Verlängerung aufweisen, damit der Drehzahlsensor möglichst nah an der Fahrzeugachse sitzt und der Impulsring in seinem Außenumfang kleiner ausgestaltet werden kann. Die für den Drehzahlsensor ausgebildete Erweiterung kann während des Gussvorgangs des Bremsträgers als Gussteil direkt an die Ausnehmung des Bremsträgers angeformt werden.

In einer weiteren Ausgestaltung weist eine Scheibenbremse einen Bremsträger und einen axial in Richtung einer Bremsscheibe axial verschieblichen Gleitsattel auf. Die Scheibenbremse umfasst weiterhin eine Befestigungseinrichtung, wobei die Befestigungseinrichtung eine in dem Bremsträger ausgebildete Aufnahme aufweist In der Aufnahme ist zumindest teilweise ein Drehzahlsensor der Befestigungseinrichtung angeordnet.

In einer letzten Ausgestaltung weist ein Fahrzeug eine Fahrzeugachse und eine an der Fahrzeugachse angeordneten Scheibenbremse auf, wobei die Scheibenbremse eine Befestigungseinrichtung umfasst und die Befestigungseinrichtung einen Drehzahlsensor und einer in einem Bremsträger der Scheibenbremse ausgebildete Aufnahme zur Anordnung des Drehzahlsensors aufweist. Es kann jede mit einer Scheibenbremse ausgebildete Fahrzeugachse eine Befestigungseinrichtung mit einem Drehzahlsensor aufweisen, wobei die Drehzahlsensoren die detektierten Raddrehzahlen an eine Steuereinheit zur genauen Bestimmung und Auswertung aller Radgeschwindigkeiten weiterleiten. Mit den Daten der Drehzahlsensoren werden unter anderen Anti-Blockier-Systeme (ABS-Systeme) geregelt, die das Fahrzeug stabilisieren und den Belagverschleiß der Reifen des Fahrzeugs minimieren.

Nachfolgend werden ausgewählte Ausführungsbeispiele der Erfindung anhand der beigefügten Figuren erläutert.

Es zeigt:
Fig. 1 einen Teilausschnitt einer Scheibenbremse mit einer erfindungsgemäßen Befestigungseinrichtung an einen Bremsträger der Scheibenbremse,
Fig. 2 ein Fahrzeug aufweisend eine Fahrzeugachse mit einer angeordneten Scheibenbremse, umfassend eine Befestigungsvorrichtung an einem Bremsträger nach Fig. 1 in einer zweiten Ausführungsform,
Fig. 3 einen Bremsträger nach Fig. 1 im Detail,
Fig. 4 eine Fahrzeugachse mit einer Befestigungsvorrichtung nach dem Stand der Technik.

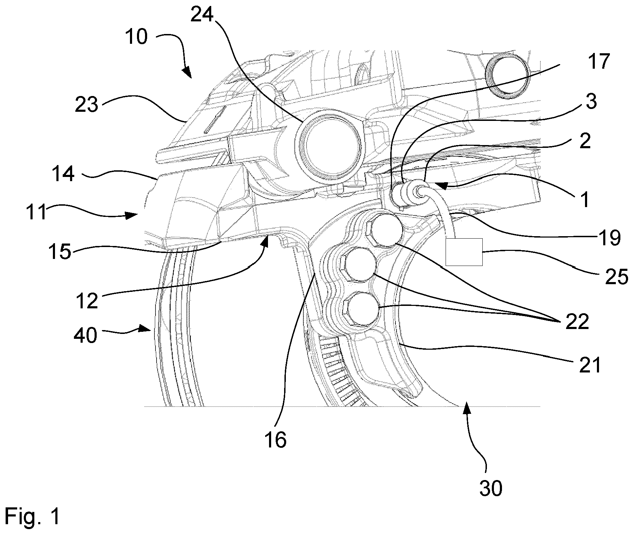

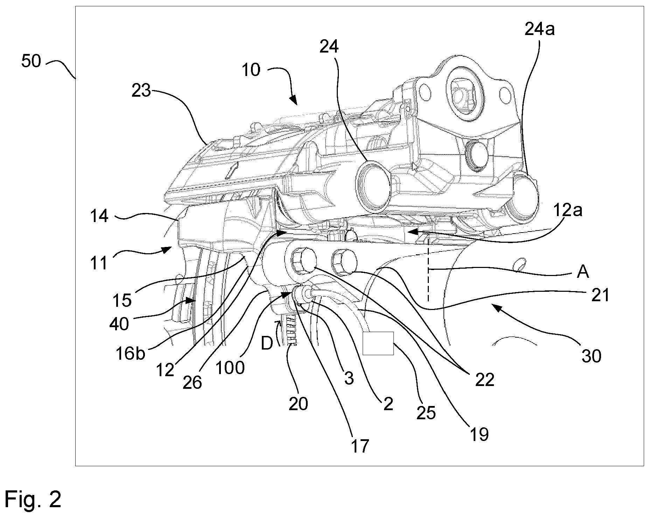

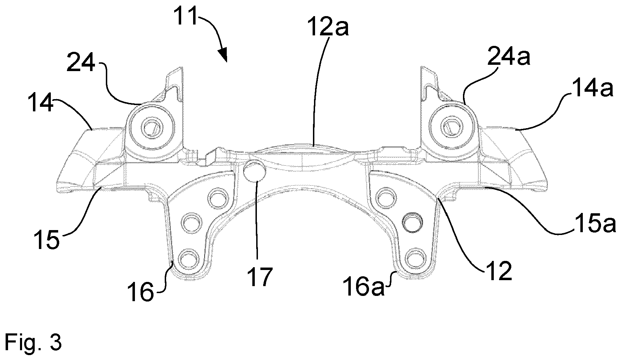

Fig. 1 zeigt einen Teilausschnitt einer Scheibenbremse 10 mit einer erfindungsgemäßen Befestigungseinrichtung 1, wobei die Befestigungseinrichtung 1 an einen Bremsträger 11 der Scheibenbremse 10 angeordnet ist. Die Befestigungseinrichtung 1 umfasst einen Drehzahlsensor 2 zum Detektieren einer in Fig. 2 gezeigten Raddrehzahl D. Der Bremsträger 11 fixiert die Scheibenbremse 10 über Befestigungsmittel 16, 16a (Fig.3) an einen Flansch 21 einer Fahrzeugachse 30 eines Fahrzeugs 50. Der Flansch 21 und die Aufnahmen 16, 16a sind über Schrauben 22 miteinander verbunden und sichern die Scheibenbremse 10 gegen ein Verdrehen auf der Fahrzeugachse 30 und /oder gegen ein Lösen der Scheibenbremse 10 von dem Flansch 21 der Fahrzeugachse 30. Der Bremsträger 11 weist weiterhin zwei Streben 12, 12a zur Aussteifung des Bremsträgers 11 auf. Die Strebe 12a ist in Fig. 3 offenbart. Die Streben 12, 12a der Befestigungseinrichtung 1 sind parallel zu einer zwischen den Streben 12, 12a positionierten Bremsscheibe 40 angeordnet. Die Streben 12,12a sind in ihrer Erstreckungsrichtung an Endabschnitten 15, 15a der Streben 12, 12a mittels zwei Verbindungselemente 14, 14a miteinander verbunden, wobei der Bremsträger 11 einen Rahmen für die Bremsscheibe 40 bildet. An der der Fahrzeugachse 30 zugewandten Strebe 12 ist axial in Bezug auf die Erstreckungsrichtung der Fahrzeugachse 30 der Drehzahlsensor 2 angeordnet. Der Drehzahlsensor 2 ist teilweise in einer als Bohrloch 17 ausgebildeten Aufnahme 17 der Strebe 12 des Bremsträgers 11 fixiert. Der Drehzahlsensor 2 weist zur Fixierung in dem Bohrloch 17 eine Klemmbuchse 3 auf. Über ein Drehzahlsensorkabel 19 ist der Drehzahlsensor 2 mit einer Steuereinrichtung 25 zum Auswerten der Raddrehzahlen D verbunden. Weiterhin ist ein Gleitsattel 23 der Scheibenbremse 10 gezeigt, wobei der Gleitsattel 23 über Bolzenführungen 24, 24a gleitend auf der Befestigungseinrichtung 1 gelagert ist. Die Bolzenführung 24a ist in Fig. 2 gezeigt.

Fig. 2 zeigt ein Fahrzeug 50 mit der Radachse 30 und der an der Radachse 30 befestigte Scheibenbremse 10 mit einer Befestigungseinrichtung 100, die an Befestigungsmittel 16b der Strebe 12 angeordnet ist. Die Funktion der Befestigungseinrichtung 100 nach Fig. 2 ist identisch mit der Befestigungseinrichtung 1 nach Fig. 1. Die Befestigungseinrichtung 100 nach Fig. 2 unterscheidet sich von der Befestigungseinrichtung 1 nach Fig. 1 durch alternativ ausgestaltete Befestigungsmittel 16b und der Anbindung des Drehzahlsensors 2 an die Befestigungseinrichtung 100. Vier Schrauben 22, fixieren die Befestigungseinrichtung 100 über die Befestigungsmittel 16b des Bremsträgers 11 an dem Flansch 21 der Fahrzeugachse 30. Zwei Schrauben und ein Befestigungsmittel sind nicht gezeigt. Die zwei nicht gezeigten Schrauben und das nicht gezeigte Befestigungsmittel sind als Spiegelbild, bezogen auf die gezeigten Schrauben 22 und dem Befestigungsmittel 16b, parallel zu einer radialen Achse A des Flansches 21 der Fahrzeugachse 30 angeordnet. Der Drehzahlsensor 2 ist, bezogen auf die Erstreckungsrichtung der Fahrzeugachse 30, parallel zur Fahrzeugachse 30 an dem

Befestigungsmittel 16b der Strebe 12 angeordnet. Das Befestigungsmittel 16b weist radial, entgegengesetzt der Richtung des Gleitsattels 23, eine Verlängerung 26 mit dem Bohrloch 17 auf, in der der Drehzahlsensor 2 fixiert ist. Die Verlängerung 26 mit dem Drehzahlsensor 2 ist in Bezug zum Gleitsattel 23 unterhalb der Schrauben 22 des Flansches 21 angeordnet, damit das Drehzahlsensorkabel 19 nicht an dem Flansch 21 vorbeigeführt werden muss und während der Montage der Befestigungseinrichtung 100 an dem Flansch 21 das Drehzahlsensorkabel 19 nicht eingeklemmt wird. Im Bewegungszustand des Fahrzeugs 50 detektiert der Raddrehzahlsensor 2 die Raddrehzahl D oder die Raddrehzahlveränderung des nicht gezeigten Rades der Fahrzeugachse 30 des Fahrzeugs 50 mittels einen als Impulsring ausgestalteten Erregers 20.und leitet im Anschluss die detektierten Raddrehzahlen D über das Drehzahlsensorkabel 19 an die Steuereinrichtung 25 weiter.

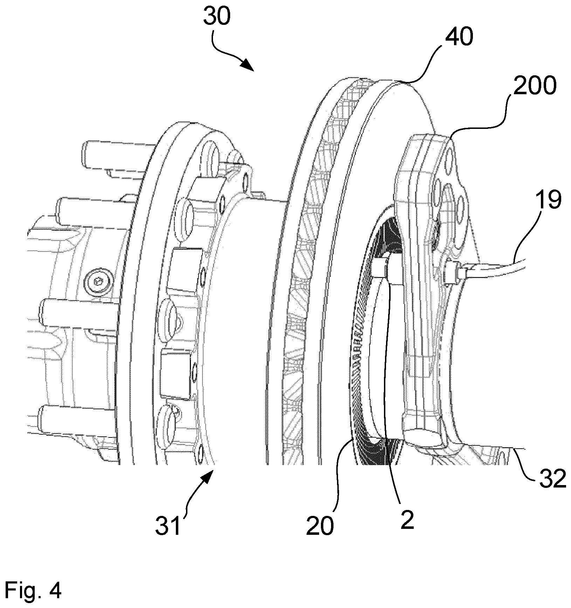

Fig. 3 zeigt noch einmal den Bremsträger 11 der Scheibenbremse 10 aus Fig. 1 im Detail. Insbesondere ist die als Bohrloch 17a ausgebildete Aufnahme 17 der Befestigungseinrichtung 1 sichtbar. Das Bohrloch 17a ist in die Strebe 12 eingebracht und durchdringt die Strebe vollständig. Das Bohrloch 17a nach Fig. 1 nimmt gegenüber dem Stand der Technik nach Fig. 4 den Drehzahlsensor 2 fast vollständig auf und schützt den Drehzahlsensor 2 effektiv vor auftretender Wärme, ausgelöst durch die Bremsscheibe 40 während eines Bremsvorgangs.

Fig 4 zeigt die Fahrzeugachse 30 mit einer Befestigungseinrichtung 200 nach dem Stand der Technik, bei dem der Drehzahlsensor 2 unabhängig von der Scheibenbremse 10 (Fig. 1 und 2) über die von der Fahrzeugachse 30 aufgenommene Befestigungseinrichtung 200 angeordnet ist. Die Befestigungseinrichtung 200 ist in dem Ausführungsbeispiel nahe an einer Achsnabe 31 an einer Radaufhängung 32 der Fahrzeugachse 30 angeschweißt. Der Drehzahlsensor 2 ist nur mit dem zum Drehzahlsensorkabel 19 gerichteten hinteren Abschnitt des Drehzahlsensors 2 von der Befestigungseinrichtung 200 aufgenommen. Die Befestigungseinrichtung 200 ist von der Bremsscheibe 40 mit einem Abstand angeordnet, der so gewählt ist, dass der Drehzahlsensor 2 nahe am als Polrad ausgebildeten Erreger 20 sitzt und die Raddrehzahl D detektieren kann. Der Drehzahlsensor 2 ist im Bereich des Abstandes der Befestigungseinrichtung 200 und der Bremsscheibe 40 nicht geschützt und damit anfällig gegenüber Wärme, die insbesondere während eines Bremsvorgangs von der Bremsscheibe 40 abstrahlt.

### Bezugszeichenliste als Teil der Beschreibung

- 1: Befestigungseinrichtung
- 2: Drehzahlsensor
- 3: Klemmbuchse
- 10: Scheibenbremse
- 11: Bremsträger
- 12, 12a: Streben der Befestigungseinrichtung 1; 100
- 14, 14a: Verbindungselemente der Befestigungseinrichtung
- 15, 15a: Endabschnitte der Streben 12, 12a
- 16 - 16b: Befestigungsmittel der Strebe 12
- 17: Aufnahme der Befestigungseinrichtung 1
- 19: Drehzahlsensorkabel
- 20: Erreger des Drehzahlsensors 2
- 21: Flansch der Fahrzeugachse 30
- 22: Schrauben des Flansches 21
- 23: Gleitsattel
- 24, 24a: Bolzenführung der Scheibenbremse 10
- 25: Steuereinrichtung
- 26: Verlängerung des Befestigungsmittel 16b
- 30: Fahrzeugachse
- 31: Achsnabe der Fahrzeugachse 30
- 32: Radaufhängung der Fahrzeugachse 30
- 40: Bremsscheibe
- 50: Fahrzeug
- 100: Befestigungseinrichtung nach dem 2. Ausführungsbeispiel
- 200: Befestigungseinrichtung nach dem Stand der Technik
- A: Radiale Achse des Flansches 21 der Fahrzeugachse 30
- D: Radrehzahl

## Patentansprüche

1. Befestigungseinrichtung (1;100) einer Scheibenbremse (10) mit einem Bremsträger (11), wobei der Bremsträger (11) zwei parallel zu einer Bremsscheibe (40) angeordnete Streben (12, 12a) umfasst, wobei die Streben (12, 12a) in ihrer Erstreckungsrichtung zwei Endabschnitte (15, 15a) aufweisen und die Streben (12, 12a) an ihren beiden Endabschnitten (15, 15a) über zwei Verbindungselemente (14, 14a) miteinander verbunden sind, wobei die Strebe (12) Befestigungsmittel (16, 16a, 16b) zum anflanschen an eine Fahrzeugachse (30) aufweist, **dadurch gekennzeichnet, dass** die Befestigungseinrichtung (1; 100) eine in dem Bremsträger (11) ausgebildete Aufnahme (17) aufweist und die Aufnahme dafür ausgebildet ist, einen Drehzahlsensor (2) zum Detektieren einer Radrehzahl (D) aufzunehmen.

2. Befestigungseinrichtung (1; 100) nach Anspruch 1, **dadurch gekennzeichnet, dass** die die Aufnahme (17) der Befestigungseinrichtung (1) ein Bohrloch (17a) ist.

3. Befestigungseinrichtung (1; 100) nach Anspruch 1 oder 2, **dadurch gekennzeichnet, dass** der Drehzahlsensor (2) zumindest teilweise in dem Bohrloch (17a) angeordnet ist.

4. Befestigungseinrichtung (1;100) nach Anspruch 3, **dadurch gekennzeichnet, dass** der Drehzahlsensor (2) eine Klemmbuchse (3) aufweist und der Drehzahlsensor (2) über die Klemmbuchse (3) in dem Bohrloch (17a) fixiert ist.

5. Befestigungseinrichtung (1) nach einem der vorangegangenen Ansprüche, **dadurch gekennzeichnet, dass** der Drehzahlsensor (2) in seiner Erstreckungsrichtung, axial in Richtung der Bremsscheibe (40), an der der Fahrzeugachse (30) zugewandten Strebe (12) angeordnet ist.

6. Befestigungseinrichtung (100) nach einem der Ansprüche 1 bis 4, **dadurch gekennzeichnet, dass** der Drehzahlsensor (2) in seiner Erstreckungsrichtung, axial in Richtung der Bremsscheibe (40), an einer Verlängerung (26) des Befestigungsmittel (16b) des Bremsträgers (11) angeordnet ist.

7. Befestigungseinrichtung (1) nach Anspruch 5, **dadurch gekennzeichnet, dass** der Drehzahlsensor (2) dazu eingerichtet ist die Raddrehzahl (D) mit einem an der Bremsscheibe (40) angeordneten Erreger (20) oder einem in der Bremsscheibe (40) angeordneten Erreger (20) zu detektieren.

8. Befestigungseinrichtung (1) nach Anspruch 6, **dadurch gekennzeichnet, dass** der Drehzahlsensor (2) dazu eingerichtet ist die Raddrehzahl (D) mit einem als Impulsring ausgebildeten Erreger (20) an der Fahrzeugachse (40) zu detektieren.

9. Scheibenbremse (10) aufweisend einen Bremsträger (11) und einen auf dem Bremsträger (11) gleitend gelagerten Gleitsattel (23), wobei die Scheibenbremse (10) eine Befestigungsvorrichtung umfasst, **dadurch gekennzeichnet, dass** die Befestigungseinrichtung (1; 100) nach einem der Ansprüche 1 bis 8 ausgebildet ist.

10. Fahrzeug (50) mit einer Fahrzeugachse (30) und einer an der Fahrzeugachse (30) angeordneten Scheibenbremse (10), wobei die Scheibenbremse (10) eine Befestigungseinrichtung (1; 100) aufweist, **dadurch gekennzeichnet, dass** die Befestigungseinrichtung (1; 100) nach einem der Ansprüche 1 bis 8 ausgebildet ist.

## Claims

1. Fastening device (1; 100) for a disk brake (10) comprising a brake carrier (11), the brake carrier (11) comprising two struts (12, 12a) arranged in parallel with a brake disk (40), the struts (12, 12a) having two end portions (15, 15a) in their direction of extension and the struts (12, 12a) being connected to one another at their two end portions (15, 15a) via two connection elements (14, 14a), the struts (12) having fastening means (16, 16a, 16b) for flange-mounting on a vehicle axle (30), **characterized in that** the fastening device (1; 100) has a receptacle (17) in the brake carrier (11) and said receptacle is designed to accommodate a rotational speed sensor (2) for detecting a wheel rotational speed (D).

2. Fastening device (1; 100) according to claim 1, **characterized in that** the receptacle (17) of the fastening device (1) is a borehole (17a).

3. Fastening device (1; 100) according to claim 1 or 2, **characterized in that** the rotational speed sensor (2) is arranged at least partially in the borehole (17a).

4. Fastening device (1; 100) according to claim 3, **characterized in that** the rotational speed sensor (2) has a clamping bush (3) and the rotational speed sensor (2) is fixed in the borehole (17a) via the clamping bush (3).

5. Fastening device (1) according to any of the preceding claims,
**characterized in that** the rotational speed sensor (2) is arranged in its direction of extension, axially in the direction of the brake disk (40), on the strut (12) facing toward the vehicle axle (30).

6. Fastening device (100) according to any of claims 1 to 4,
**characterized in that** the rotational speed sensor (2) is arranged in its direction of extension, axially in the direction of the brake disk (40), on a prolongation (26) of the fastening means (16b) of the brake carrier (11).

7. Fastening device (1) according to claim 5, **characterized in that** the rotational speed sensor (2) is configured to detect the wheel rotational speed (D) using an exciter (20) arranged on the brake disk (40) or an exciter (20) arranged in the brake disk (40).

8. Fastening device (1) according to claim 6, **characterized in that** the rotational speed sensor (2) is configured to detect the wheel rotational speed (D) using an exciter (20) designed as a pulse ring on the vehicle axle (40).

9. Disk brake (10) having a brake carrier (11) and a sliding saddle (23) slidingly mounted on the brake carrier (11), the disk brake (10) comprising a fastening device, **characterized in that** the fastening device (1; 100) is designed according to any of claims 1 to 8.

10. Vehicle (50) having a vehicle axle (30) and a disk brake (10) arranged on the vehicle axle (30), the disk brake (10) having a fastening device (1; 100), **characterized in that** the fastening device (1; 100) is designed according to any of claims 1 to 8.

## Revendications

1. Dispositif de fixation (1 ;100) d'un frein à disque (10) comportant un support de frein (11), dans lequel le support de frein (11) comprend deux entretoises (12, 12a) disposées parallèlement à un disque de frein (40), dans lequel les entretoises (12, 12a) présentent deux sections d'extrémité (15, 15a) dans leur direction d'extension et les entretoises (12, 12a) sont reliées entre elles au niveau de leurs deux sections d'extrémité (15, 15a) par l'intermédiaire de deux éléments de liaison (14, 14a), dans lequel l'entretoise (12) présente des moyens de fixation (16, 16a, 16b) permettant l'accouplement par bride à un essieu de véhicule (30), **caractérisé en ce que** le dispositif de fixation (1 ; 100) présente un logement (17) réalisé dans le support de frein (11) et le logement est réalisé pour recevoir un capteur de vitesse de rotation (2) permettant de détecter une vitesse de rotation de roue (D).

2. Dispositif de fixation (1 ; 100) selon la revendication 1,
**caractérisé en ce que** le le logement (17) du dispositif de fixation (1) est un alésage (17a).

3. Dispositif de fixation (1 ; 100) selon la revendication 1 ou 2,
**caractérisé en ce que** le capteur de vitesse de rotation (2) est disposé au moins partiellement dans l'alésage (17a).

4. Dispositif de fixation (1 ;100) selon la revendication 3,
**caractérisé en ce que** le capteur de vitesse de rotation (2) présente une douille de serrage (3) et le capteur de vitesse de rotation (2) est fixé dans l'alésage (17a) par l'intermédiaire de la douille de serrage (3).

5. Dispositif de fixation (1) selon l'une des revendications précédentes, **caractérisé en ce que** le capteur de vitesse de rotation (2) est disposé, dans sa direction d'extension, axialement en direction du disque de frein (40), sur l'entretoise (12) tournée vers l'essieu de véhicule (30).

6. Dispositif de fixation (100) selon l'une des revendications 1 à 4, **caractérisé en ce que** le capteur de vitesse de rotation (2) est disposé, dans sa direction d'extension, axialement en direction du disque de frein (40), sur un prolongement (26) du moyen de fixation (16b) du support de frein (11).

7. Dispositif de fixation (1) selon la revendication 5, **caractérisé en ce que** le capteur de vitesse de rotation (2) est configuré pour détecter la vitesse de rotation de roue (D) à l'aide d'un excitateur (20) disposé sur le disque de frein (40) ou d'un excitateur (20) disposé dans le disque de frein (40).

8. Dispositif de fixation (1) selon la revendication 6, **caractérisé en ce que** le capteur de vitesse de rotation (2) est configuré pour détecter la vitesse de rotation de roue (D) à l'aide d'un excitateur (20) réalisé sous forme d'anneau d'impulsion au niveau de l'essieu de véhicule (40).

9. Frein à disque (10) présentant un support de frein (11) et un étrier coulissant (23) monté de manière à coulisser sur le support de frein (11), dans lequel le frein à disque (10) comprend un appareil de fixation,
**caractérisé en ce que** le dispositif de fixation (1 ; 100) est réalisé selon l'une des revendications 1 à 8.

10. Véhicule (50) comportant un essieu de véhicule (30) et un frein à disque (10) disposé sur l'essieu de véhicule (30), dans lequel le frein à disque (10) présente un dispositif de fixation (1 ; 100), **caractérisé en ce que** le dispositif de fixation (1 ; 100) est réalisé selon l'une des revendications 1 à 8.
